(19) Europäisches Patentamt
European Patent Office
Office européen des brevets

(11) **EP 3 205 024 B1**

(12) **EUROPEAN PATENT SPECIFICATION**

(45) Date of publication and mention
of the grant of the patent:
**09.09.2020 Bulletin 2020/37**

(51) Int Cl.:
*H02M 3/156* (2006.01)   *H02M 3/158* (2006.01)
*H03K 19/0175* (2006.01)   *G05F 1/618* (2006.01)
*H02M 1/00* (2006.01)

(21) Application number: **15848860.1**

(22) Date of filing: **06.10.2015**

(86) International application number:
**PCT/US2015/054309**

(87) International publication number:
**WO 2016/057566 (14.04.2016 Gazette 2016/15)**

(54) **INTEGRATED CIRCUIT WITH EXTERNAL RESISTANCE DETECTION**

INTEGRIERTE SCHALTUNG MIT DETEKTION VON EXTERNEM WIDERSTAND

CIRCUIT INTÉGRÉ À DÉTECTION DE RÉSISTANCE EXTERNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.10.2014 US 201462060444 P
23.09.2015 US 201514863014**

(43) Date of publication of application:
**16.08.2017 Bulletin 2017/33**

(73) Proprietor: **Texas Instruments Incorporated
Dallas, TX 75265-5474 (US)**

(72) Inventor: **SILVA, Faruk, Jose Nome
Sunnyvale, CA 94086 (US)**

(74) Representative: **Zeller, Andreas
Texas Instruments Deutschland GmbH
Haggertystraße 1
85356 Freising (DE)**

(56) References cited:
US-A- 5 864 225       US-A1- 2008 048 631
US-A1- 2013 314 606   US-B1- 6 294 903
US-B2- 7 453 287      US-B2- 7 515 441
US-B2- 8 669 751

• Rohm: "Switching Regulator IC Series Resistor
Value Table to set Output Voltage of Buck
Converter IC Configuration of a typical Buck
Converter IC", , 31 January 2013 (2013-01-31),
XP055473337, Retrieved from the Internet:
URL:http://rohmfs.rohm.com/en/products/dat
abook/applinote/ic/power/switching_regulat
or/resistor_setting_for_vout_appli-e.pdf
[retrieved on 2018-05-08]

## Description

This relates generally to regulated power supplies, and more particularly to configuration of power output by a regulated power supply.

BACKGROUND

Electronic devices rely on power supply components to provide a regulated amount of power in accordance with the requirements and limitations of the electronic device. Power supplies typically receive an input power supply and are configured to output a regulated supply of power. In many cases, a power supply converts a high-voltage input, such as mains power, to a regulated low-voltage output suitable for powering electronic devices. In other cases, a power supply converts battery power to a regulated voltage. The output voltage that is generated by a power supply is determined based on the specifications of the electronic device to be powered.

Many electronic devices are designed to operate with regulated power supplies, which are designed to generate only the specific fixed output voltage used by the device. Based on the voltage that is required by an electronic device, a conventional fixed-voltage power supply is selected that has been designed to output this particular required voltage. If a different voltage is required, then a different fixed-voltage power supply is selected that is capable of supplying the required voltage. This use of different fixed-voltage power supply designs, which are customized to generate different specific output voltages, requires a power supply manufacturer to support a large number of power supply models. This also requires electronic device manufacturers to qualify each different power supply model to incorporate it into their designs.

Instead of providing a different power supply component for every supported fixed output voltage, an adjustable power supply can be configured to support a range of output voltages. Adjustable voltage outputs by a power supply may be supported via an input pin of the power supply, so the output voltage is set based on the voltage detected at the input pin. In this manner, an adjustable power supply can be configured to support multiple different output voltages.

Conventional adjustable output and conventional fixed output power supplies are not interchangeable. A device designed to work with a fixed output power supply does not include the circuitry required to specify an adjusted output voltage.

Conventional power supplies that are capable of supporting both fixed and adjustable output devices do so by providing at least two input pins to the power supply. One pin may specify a feedback voltage for use in the control loop of power supply, and another pin may specify if a fixed output voltage is to be provided by the power supply. "Switching Regulator IC Series Resistor Value Table to set Output Voltage of Buck Converter IC Configuration of a typical Buck Converter IC" published by ROHM relates to a resistor value table to set the output voltage of a buck converter IC. US 2008/048631 relates to an automatic external switch detection in a synchronous switching regulator controller. US 5,864,225 relates to dual adjustable voltage regulators.

SUMMARY

The invention is defined by an apparatus according to claim 1 and a method according to claim 9. Preferred embodiments are described by the dependent claims. In described examples of a power supply circuit, the output voltage of the power supply is configured based on a control loop feedback voltage provided at an input pin to the power supply circuit. Based on the input pin voltage, the power supply is configured to detect whether a resistance network exists, external to the input pin. The power supply is configured to detect the existence of external resistance network by alternating between attempts to pull the feedback voltage to a high level and to low level. Based on the response to the pull-up and pull-down attempts at the input pin voltage, the power supply determines whether an external resistance network exists in the control loop. If an external resistance network is detected, the power supply is configured to generate the output voltage specified by the resistance network at the input pin. If no external resistance network is detected, the power supply is configured to generate a default output voltage. In this manner, the power supply can be configured to generate various output voltages using a single input pin.

According to one aspect of a power supply circuit and a method of configuring the output voltage of a power supply, the power supply includes: a regulator operable to convert an input voltage to an output voltage and further operable to set the output voltage based on a feedback voltage provided via a feedback loop; an input pin operable to receive an input pin voltage; and a detection circuit operable to set the feedback voltage based on the detection of a resistance connected external to the input pin, wherein the resistance is detected based on the input pin voltage.

According to additional aspects, the detection circuit may be further operable to set the feedback voltage to a default output voltage, if no external resistance is detected. The detection circuit may be further operable to set the feedback voltage to the input pin voltage, if an external resistance is detected. The detection circuit may be further operable to set the feedback voltage to a reference voltage of the power supply, if an external resistance is detected and the input pin voltage has a predefined value. The detection circuit may include an internal resistance network specifying the default output voltage, where the feedback voltage is set to the default output voltage by connecting the internal resistance network to the feedback loop. The detection circuit may be enabled during a test mode that expires after a predefined interval.

According to additional aspects, the detection circuit may further include: a pull-up circuit operable to apply a first pulse in the output current of the power supply and further configured to detect a first change in the input pin voltage in response to the first pulse; and a pull-up latch operable to record whether the first change is detected in the input pin voltage. According to additional aspects, the detection circuit may further include: a pull-down circuit operable to apply a second pulse in the output current of the power supply and further configured to detect a second change in the input pin voltage in response to the second pulse; and a pull-down latch operable to record whether the second change is detected in the input pin voltage. An external resistance may be determined to be connected to the input pin if the pull-up latch records the detection of the first change in the input pin voltage, and if the pull-down latch records the detection of the second change in the input pin voltage. The duration of the first pulse may be selected based on a capacitance connected external to the input pin

BRIEF DESCRIPTION OF THE DRAWINGS

FIG. 1 is a schematic diagram depicting certain components of a conventional adjustable power supply that is configured using a voltage divider.

FIG. 2 is a schematic diagram of certain components of a power supply according to one aspect of example embodiments, the power supply including a default detection circuit for detection of an external resistance network.

FIG. 3 is a schematic diagram of certain components of a power supply, according to another aspect of example embodiments, the power supply having detected no external resistance network and generating a default output voltage.

FIG. 4 is a schematic diagram of certain components of a power supply, according to another aspect of example embodiments, the power supply having detected an external resistance network specifying an output voltage.

FIG. 5 is a schematic diagram of certain components of a power supply, according to another aspect of example embodiments, the power supply having detected an external resistor specifying the use of the power supply reference voltage.

FIG. 6 is a schematic diagram of a detection component configured to determine whether an external resistance exists in the feedback control loop.

DETAILED DESCRIPTION OF EXAMPLE EMBODIMENTS

Preferably, a single power supply would be capable of supporting devices designed to operate with both fixed and adjustable output voltages. At least some power supply manufacturers may prefer to use a single power supply capable of operating with both fixed and adjustable output devices, while only having to provide one pin as an input to the power supply.

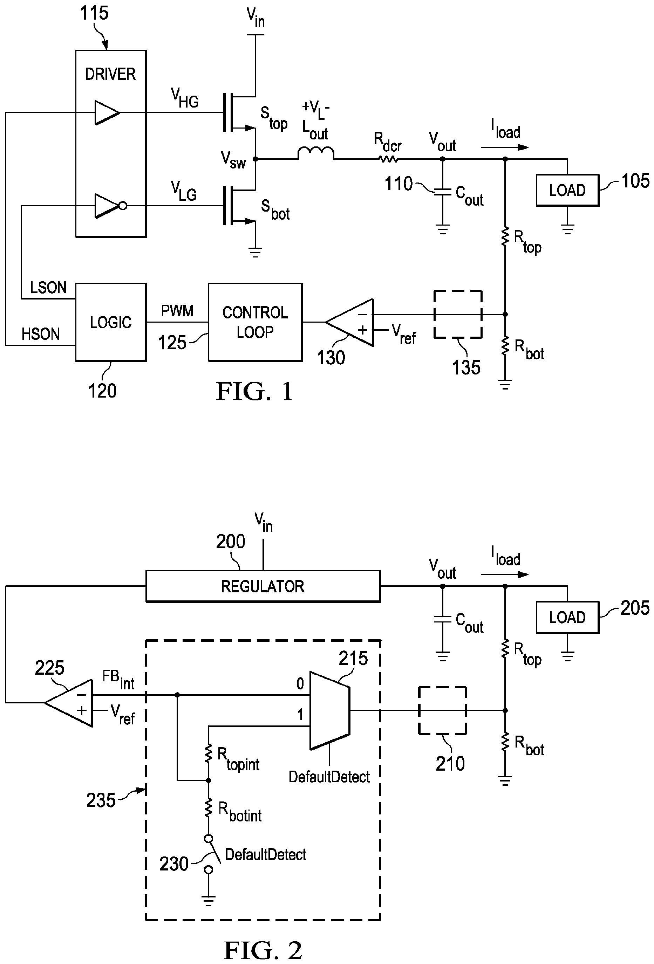

FIG. 1 depicts certain components of a conventional adjustable switched mode power supply (SMPS) that receives an input voltage $V_{IN}$ and generates a regulated output voltage $V_{OUT}$ to a load 105. The conventional power supply of FIG. 1 uses a voltage divider to specify the output voltage $V_{OUT}$ required by load 105. The output voltage $V_{OUT}$ is also provided as an input to the power supply via an input pin 135, thus creating a feedback loop used by the power supply to regulate the output voltage $V_{OUT}$. The output voltage provided to input pin 135 is determined based on the voltage requirements of load 105 and is set using a voltage divider including $R_{TOP}$ and $R_{BOT}$.

The voltage provided to the input pin 135 is then provided to a comparator component 130 that is configured to provide feedback voltage to the control loop of the power supply. As another input, the comparator component 130 receives a reference voltage $V_{REF}$, which is the lowest regulated voltage that is supported by the power supply. A typical reference voltage is IV. The comparator component 130 is configured to output either the voltage received from the input pin 135 or the reference voltage $V_{REF}$ as a feedback voltage, depending on which input is greater. This ensures that the power supply will not generate an output voltage that is lower than the reference voltage $V_{REF}$.

The conventional power supply of FIG. 1 is a switched mode power supply that implements a buck regulator using control loop 125 to generate a pulse-width modulated (PWM) signal. The PWM signal is used by switching logic 120 to generate alternating low-side and high-side signals. These alternating signals are used by a driver 115 to generate gate signals that control switching elements to convert the input voltage $V_{IN}$ to a lower voltage signal, which is smoothed to generate an output voltage $V_{OUT}$ suitable for powering the load 105.

The output voltage $V_{OUT}$, generated by the adjustable power supply, is determined based on the output of the network of resistors used as the input the feedback loop. In the conventional power supply of FIG. 1, the output voltage $V_{OUT}$ is specified using a voltage divider implemented by series resistors $R_{TOP}$ and $R_{BOT}$. Configured in this manner, the output voltage of the power supply of FIG. 1 is:

$$Vout = Vref * \left(1 + \frac{Rtop}{Rbot}\right)$$

As described above, certain electronic devices are configured to operate with power supplies that generate only the specific fixed output voltage required by the device. However, conventional adjustable output and conventional fixed output power supplies are not interchangeable. For example, if a device designed to operate with a fixed voltage power supply (and thus not including an $R_{TOP}$ and $R_{BOT}$ resistor network) is connected to the conventional adjustable power supply of FIG. 1, the power supply will only generate a reference voltage output. The conventional adjustable power supply requires the device to specify any output voltage other than the reference voltage.

The only fixed voltage that can be supported using the conventional adjustable power supply of FIG. 1 is the reference voltage $V_{REF}$. However, the reference voltage $V_{REF}$ is the lowest regulated voltage that is supported by the power supply. This reference voltage is not a commonly used output voltage. Accordingly, the conventional adjustable power supply of FIG. 1 is not suitable for use as a fixed-voltage power supply without the power supply providing: (a) a first input pin to detect an adjustable voltage signal; and (b) a second pin to detect a fixed voltage signal. A need exists for an adjustable power supply that can be used in both fixed and adjustable voltage designs, while only requiring one pin be provided as in input by the power supply.

FIG. 2 depicts a circuit diagram of certain components of a switched mode power supply that illustrates aspects of example embodiments. In the power supply of FIG. 2, a switching regulator 200 is used for converting an input voltage $V_{IN}$ to a lower output voltage $V_{OUT}$, suitable for powering load 205. The power supply is configured to provide load 205 with either a default fixed output voltage or an output voltage adjusted to a voltage specified by the device. The power supply generates a fixed default output voltage if no output voltage adjustments have been specified by the device, indicating that the load 205 is configured to operate using the default output voltage of the power supply. The power supply determines whether to generate the default fixed output voltage or the requested adjusted output voltage, based on the input to a single input pin 210 of the power supply.

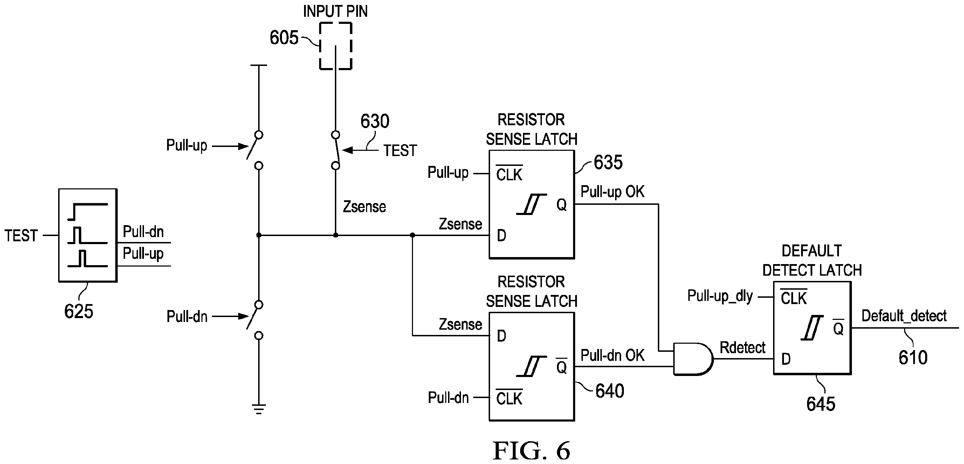

The power supply of FIG. 2 includes a default detection circuit 235 that determines whether an adjusted output voltage or the default output voltage has been specified for use by the load 205. If an adjusted output voltage is specified, a resistor network external to the default detection circuit 235 exists in the feedback control loop. The external resistor network is configured to adjust the voltage at the input pin 210 of the power supply. If no external resistor network exists, this indicates that the device is designed to operate with a fixed output voltage, in which case the power supply outputs the default output voltage. The default detection circuit 235 senses whether an external resistor network exists, in order to determine whether to output an adjusted output voltage specified by the device or the default output voltage. The default detection circuity 235 uses a detection component 215, which implements a testing procedure to sense whether an external resistance network is connected to the input pin 210. The details of the detection component 215 are provided below with respect to FIG. 6.

In the power supply of FIG. 2, a resistor network external to the default detection circuit 235 exists in the form of the voltage divider implemented using $R_{TOP}$ and $R_{BOT}$. The voltage divider formed by $R_{TOP}$ and $R_{BOT}$ is connected as an input to the power supply input pin 210. If no external resistor network, such as the $R_{TOP}$ and $R_{BOT}$ voltage divider, is detected by the detection component 215, then the default detection circuit 235 uses an internal network of resistors to set the default output voltage to be generated. In the power supply of FIG. 2, the internal resistor network includes a voltage divider implemented by $R_{TOPINT}$ and $R_{BOTINT}$. If no external resistance network is detected, the detection component 215 signals the internal resistance network to generate a default output voltage.

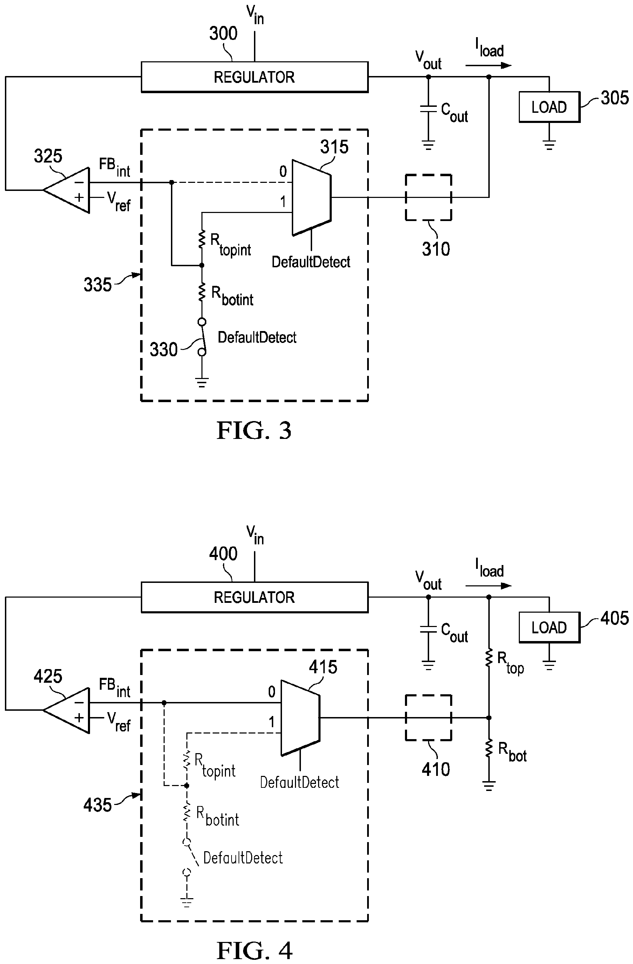

FIG. 3 illustrates a scenario, according to one aspect of example embodiments, where a switching regulator 300 is used for converting an input voltage $V_{IN}$ to a lower output voltage $V_{OUT}$, suitable for powering load 305. In the power supply of FIG. 3, no external resistor network exists, and the power supply responds by generating a default output voltage. Without an external resistor network, the input pin 310 receives the output voltage $V_{OUT}$ as an input. The detection component 315 of the default detection circuit 335 determines that the voltage at the input pin 310 is the output voltage $V_{OUT}$. In response, the detection component 315 outputs a signal indicating that the default output voltage is to be generated by the power supply. This signal configures a switch element 330 of the default detection circuit 335 to connect the internal resistance network to the feedback control loop of the power supply. In FIG. 3, the internal resistance network includes a voltage divider implemented by $R_{TOPINT}$ and $R_{BOTINT}$. The comparator component 325 determines that the default output voltage generated by the internal resistor network is greater than the reference voltage and outputs the default voltage to the feedback control loop of the power supply. Configured in this manner, the power supply generates a default output voltage specified by:

$$Vout = Vref * (1 + \frac{Rtopint}{Rbotint})$$

FIG. 4 illustrates a scenario, according to one aspect of example embodiments, where a switching regulator 400 is used for converting an input voltage $V_{IN}$ to a lower output voltage $V_{OUT}$, suitable for powering load 405. In the power supply of FIG. 4, an external resistor network is provided by the device, and the power supply responds by generating the adjusted output voltage specified by the external resistor network. The adjusted output voltage is specified in FIG. 4 by a voltage divider implemented by $R_{TOP}$ and $R_{BOT}$. This adjusted output voltage is provided to the power supply via input pin 410. This input is processed by the detection component 415 of the default detection circuit 435. The detection component 415 determines that an external resistance is connected to input pin 410, such that power supply is to generate the adjusted output voltage specified at the input pin 410 by the voltage divider.

Upon detection of the external resistance, the adjusted output voltage from pin 410 is output by the detection component 415 to comparator component 425. Upon verification that the adjusted output voltage is greater than the reference voltage of the power supply, the comparator component 425 outputs the adjusted voltage, thus configuring the feedback loop of the power supply. Because an adjusted output voltage has been specified instead of the default output voltage of the power supply, the detection component 415 does not enable the internal resistance network component of the default detection circuit 435. Instead, the detection component 415 connects the external resistance network, including the voltage divider implemented by $R_{TOP}$ and $R_{BOT}$, to the feedback control loop of the power supply.

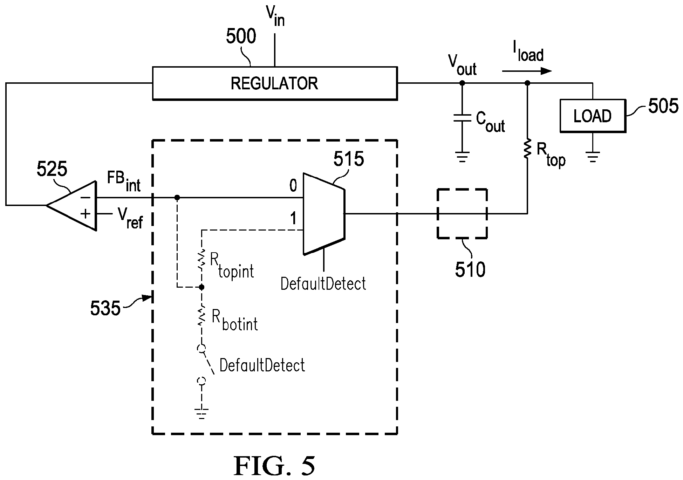

FIG. 5 illustrates another aspect of example embodiments, by which the power supply is configured to output the advertised reference voltage of the power supply. Like the power supplies of the figures discussed hereinabove, the power supply of FIG. 5 uses a switching regulator 500 to convert an input voltage $V_{IN}$ to a lower output voltage $V_{OUT}$, suitable for powering load 505. In the power supply of FIG. 5, the network of resistors includes a single resistor $R_{TOP}$, where the resistance of $R_{TOP}$ is selected to direct the default detection circuit 535 to set the output voltage to the reference voltage of the power supply. In certain aspects, $R_{TOP}$ is a mode-select resistor that has been agreed upon as directing the power supply to output its advertised reference voltage as an output.

As with the voltage divider resistance network of FIG. 3, the detection component 515 measures the voltage at the input pin 510 and determines that a resistance exists in the feedback control loop. In FIG. 5, the voltage drop at the input pin created by $R_{TOP}$ is recognized by the detection component 515 as signaling the use of the reference voltage by the electronic device. When the specific voltage associated with $R_{TOP}$ is detected at the input pin 510, the detection component 515 outputs a default detect signal that disconnects the internal resistance network from the feedback control loop. The detection component 515 outputs the reference voltage, which is recognized by the comparator component 525 as an indication to connect the reference voltage to the feedback control loop. In certain aspects, $R_{TOP}$ may be selected to generate the reference voltage at the input pin 510.

FIG. 6 illustrates an implementation of a detection component that operates in accordance with the above descriptions of this component. The detection component receives the feedback voltage provided by the electronic device at the input pin 605. Based on this input pin voltage, the detection component determines whether an external resistance network exists in the feedback control loop, indicating that the electronic device has been configured to specify an output voltage to be generated by the power supply. As described, in certain aspects, the existence of particular external resistance in the feedback control loop indicates that the electronic device requires the reference voltage of the power supply. If no external resistance is detected (indicating an electronic device that is configured to operate with a fixed-output power supply), the detection component generates an output 610 signaling the generation of a default output voltage by the power supply.

The detection component uses pull-up and pull-down logic to determine whether the input pin voltage 605 has been adjusted using an external resistance network or whether the input pin voltage 605 is the output voltage of the power supply. In certain aspects, a test mode is initiated, during which the detection component tests the input pin voltage 605 to determine whether a resistance network exists. A test mode is initiated via a test signal 630 that connects the pull-up and pull-down logic to the input pin voltage 605, thus activating the pull-up and pull-down logic.

Test mode may be used during initialization of the power supply. In many aspects, test mode during initialization is sufficient. In other aspects, post-start up test modes can be initiated. The initiation of the test mode results in the commencement of a timer. After the timer expires, the test signal 630 disconnects the pull-up and pull-down logic from the feedback control loop, and the test mode ends. By enabling the pull-up and pull-down logic only during test mode, power is allowed to be conserved, and floating gate issues are avoided.

After the test mode has been initiated and the detection component is configured for testing of the input pin voltage 605, two consecutive pulses 625 are generated, namely: (a) one pulse to pull up the input pin voltage; and (b) another pulse to pull down the input pin voltage. The detection component uses resistor sense latches 635, 640 to determine whether the pull-up and pull-down attempts were successful. Upon being activated, each resistor sense latch 635, 640 measures the response to a pulse at the input pin voltage 605 and compares the response against a reference signal.

Resistor sense latch 635 determines whether the pull-up was successful by measuring the input pin voltage 605 and comparing it against a reference signal, which specifies that an increase in voltage may be expected due to the existence of a resistance network in the feedback loop. During a pull-up attempt, the pull-up logic increases the current in the power supply output to determine whether the input pin voltage 605 is affected. If the resistor sense latch 635 determines the input pin voltage 605 has been pulled up as expected, with respect to the reference signal, the latch records a value indicating the pull-up attempt was successful.

If resistor latch 635 determines that pull-up was successful, this indicates that an external resistance network exists in the feedback loop. If no external resistance network exists, the detection component will be unable to pull-up the input pin voltage during the time allotted to a pull-up pulse. With reference to FIG. 3, where no external resistance network exists, a pulse in the current will be absorbed in charging $C_{OUT}$ and will not cause an increase in the input pin voltage until $C_{OUT}$ is fully charged. Because $C_{OUT}$ is typically a relatively large capacitor, $C_{OUT}$ will not fully charge during a testing cycle and thus prevent a pull-up attempt from succeeding. If any external resistance network exists in parallel with $C_{OUT}$, such as in FIG. 4, then the detection component will be able to establish an increase in the input pin voltage in response to a pulse in the output voltage.

Resistor latch 640 records the input pin voltage 605 and determines whether the pull-down was successful. Like the pull-up attempt, if no external resistance network exists, the detection component will be unable to pull-down the input pin voltage during the time allotted to a pull-down pulse. The use of pull-down logic allows the detection component to test the ability to affect the input pin voltage in situations where the output voltage is relatively high. As described hereinabove, if no external resistance network exists, the change in the output current of the power supply in a pull-down pulse will be masked by $C_{OUT}$ and will preclude a response in the input pin voltage during the testing cycle.

In certain aspects, timers are used for specifying the length of pull-down and pull-up test cycles. Upon activation of the test mode, a pull-up timer is activated. As described hereinabove, the detection component determines whether an expected increase occurs in the input pin voltage in response to a pulse in the output current of the power supply. Before the expiration of the pull-up timer, the resistor sense latch 635 samples its inputs and records whether the pull-up attempt was successful. Conversely, a pull-down timer specifies the duration of a pull-down attempt and is used for triggering the resistor sense latch 640 to sample its inputs and record whether the pull-down attempt was successful.

In certain aspects, the lengths of test cycles (during which pull-up and pull-down attempts are made) are configured based on capacitors existing in the feedback control loop. For example, certain regulators include a feedforward capacitor $C_{FF}$ for use in improving the transient response of $V_{OUT}$. A feedforward capacitor is typically connected in parallel to $R_{TOP}$ and is coupled to $C_{OUT}$. To account for the feedforward capacitor in the feedback loop, the duration of the pull-up and pull-down pulses in a test cycle may be specified by:

$$T_{PULL} > 3 * R_{PULL} * C_{FF}$$

where $T_{PULL}$ is the length of the pull-up and pull-down pulses, $R_{PULL}$ is the pull-up and pull-down resistance, and $C_{FF}$ is the feedforward capacitance.

After successive pull-up and pull-down attempts have been completed, such that the input pin voltage 605 has been recorded by the resistor latches 635 and 640, the detection component determines the correct voltage for the power supply output to the electronic device. If the pull-down logic determines that the pull-down was successful, and if the pull-up logic determines that the pull-up was successful, this indicates that a resistance network is connected in the feedback control loop. The signals from each of the resistor latches 635 and 640, indicating whether the pull-up and pull-down attempts were successful, are inputs to an AND gate. The output from the AND gate is stored in default detection latch 645. If the recorded state held by default detection latch 345 indicates that a resistance network exists, the default detected signal 610 is deasserted, and the internal resistance network of the default detection circuit is not connected to the feedback loop. The input pin voltage 605 thus indicates the adjusted output voltage specified for use by the electronic device and is connected to the feedback control loop and used for specifying the output voltage of the power supply.

If either the pull-down attempt or the pull-up attempt fail, this indicates that no resistance network exists in the control loop, as the input pin voltage is determined to be the output voltage of the power supply. In this scenario, the inputs to the AND gate from each of the resistor latches 635, 640 results in a low output by the AND gate. This output is stored by the default detection latch 645, which asserts the default detected signal 610 to signal the connection of the internal resistance network to the feedback loop. The input pin voltage 605 thus indicates that the default output voltage, specified by the internal resistance network, is to be generated by the power supply.

In the aspects described above, the power supply is a voltage regulator, such as a buck converter, which serves as a DC-DC convertor. Other applications may include low-dropout regulators, short-circuit detection components, and software pin detection components.

Modifications are possible in the described embodiments, and other embodiments are possible, within the scope of the claims.

**Claims**

1. A switching power supply circuit configured to control the conversion of an input voltage ($V_{IN}$) to an output voltage ($V_{OUT}$), comprising:

    a switch control circuit (200, 300, 400, 500) configured to provide transistor switching signals to set the output voltage ($V_{OUT}$) based on a feedback voltage provided via a feedback loop;
    an input pin (210, 310, 410, 510, 605) configured to receive an input pin voltage; and
    a detection circuit (235, 335, 435, 535) configured to detect whether the input pin voltage has been adjusted using an external resistance network ($R_{top}$, $R_{bot}$) or whether the input pin voltage is the output voltage ($V_{OUT}$) of the power supply, the detection circuit (235, 335, 435, 535) further configured to set the feedback voltage to a default output voltage if no input pin voltage adjustment is detected,
wherein the detection circuit (235, 335, 435, 535) includes an internal resistance network ($R_{topint}$, $R_{botint}$) specifying the default output voltage, and wherein the feedback voltage is set to the default output voltage by connecting the internal resistance network ($R_{topint}$, $R_{botint}$) to the feedback loop.

2. The power supply circuit of claim 1, wherein the detection circuit (235, 335, 435, 535) is further configured to set the feedback voltage to the input pin voltage, if an external resistance is detected.

3. The power supply circuit of claim 1, wherein the detection circuit (235, 335, 435, 535) is further configured to set the feedback voltage to a reference voltage of the power supply, if an external resistance is detected and if the input pin voltage has a predefined value.

4. The power supply circuit of claim 1, wherein the detection circuit (235, 335, 435, 535) includes: a pull-up circuit configured to apply a first pulse in the output current of the power supply and further configured to detect a first change in the input pin voltage in response to the first pulse; and a pull-up latch configured to record whether the first change is detected in the input pin voltage.

5. The power supply circuit of claim 4, wherein the detection circuit (235, 335, 435, 535) further includes: a pull-down circuit operable to apply a second pulse in the output current of the power supply and further configured to detect a second change in the input pin voltage in response to the second pulse; and a pull-down latch operable to record whether the second change is detected in the input pin voltage.

6. The power supply circuit of claim 5, wherein an external resistance is connected to the input pin (210, 310, 410, 510, 605) if the pull-up latch records the detection of the first change in the input pin voltage and if the pull-down latch records the detection of the second change in the input pin voltage.

7. The power supply circuit of claim 1, wherein the detection circuit (235, 335, 435, 535) is enabled during a test mode that expires after a predefined interval.

8. The power supply circuit of claim 4, wherein the duration of the first pulse is selected based on a capacitance connected external to the input pin (210, 310, 410, 510, 605).

9. A method of configuring the output voltage ($V_{OUT}$) of a power supply, the method comprising:

setting an output voltage ($V_{OUT}$) of the power supply based on a feedback voltage provided via a feedback loop;
measuring an input pin voltage at an input pin (210, 310, 410, 510, 605) of the power supply;
detecting whether the input pin voltage has been adjusted using an external resistance network ($R_{top}$, $R_{bot}$) or whether the input pin voltage is the output voltage ($V_{OUT}$) of the power supply; and
setting the feedback voltage to a default output voltage by connecting an internal resistance network ($R_{topint}$, $R_{botint}$) to the feedback loop if no input pin voltage adjustment is detected.

10. The method of claim 9, further comprising: setting the feedback voltage to the input pin voltage, if a resistance is detected external to the input pin (210, 310, 410, 510, 605).

11. The method of claim 9, further comprising: setting the feedback voltage to a reference voltage of the power supply, if a resistance is detected external to the input pin (210, 310, 410, 510, 605) and if the input pin voltage has a predefined value.

12. The method of claim 9, further comprising: applying a first pulse in the output current of the power supply; detecting a first change in the input pin voltage in response to the first pulse; and recording whether the first change is detected in the input pin voltage; optionally wherein the duration of the first pulse is selected based on a capacitance connected external to the input pin (210, 310, 410, 510, 605).

13. The method of claim 12, further comprising: applying a second pulse in the output current of the power supply; detecting a second change in the input pin voltage in response to the second pulse; and recording whether the second change is detected in the input pin voltage.

14. The method of claim 13, further comprising: determining that an external resistance is connected to the input pin (210, 310, 410, 510, 605) if the first change in the input pin voltage is recorded in response to the first pulse and if the second change in the input pin voltage is recorded in response to the second pulse.

15. The method of claim 9, further comprising: detecting the external resistance during a test mode that expires after a predefined interval.

**Patentansprüche**

1. Schaltnetzteilschaltung, die dafür ausgelegt ist, die Umwandlung einer Eingangsspannung ($V_{IN}$) in eine Ausgangsspannung ($V_{OUT}$) zu steuern, umfassend:

eine Schaltsteuerschaltung (200, 300, 400, 500), die dafür ausgelegt ist, Transistorschaltsignale dafür bereitzustellen, die Ausgangsspannung ($V_{OUT}$) auf der Grundlage einer über eine Rückkopplungsschleife bereitgestellten Rückkopplungsspannung einzustellen;
einen Eingangs-Pin (210, 310, 410, 510, 605), der dafür ausgelegt ist, eine Eingangs-Pin-Spannung zu empfangen; und
eine Detektionsschaltung (235, 335, 435, 535), die dafür ausgelegt ist, zu detektieren, ob die Eingangs-Pin-Spannung unter Verwendung eines externen Widerstandsnetzwerks ($R_{top}$, $R_{bot}$) angepasst wurde oder ob die Eingangs-Pin-Spannung die Ausgangsspannung ($V_{OUT}$) des Netzteils ist, wobei die Detektionsschaltung (235, 335, 435, 535) ferner dafür ausgelegt ist, die Rückkopplungsspannung auf eine Standardausgangsspannung einzustellen, wenn keine Anpassung der Eingangs-Pin-Spannung detektiert wird, wobei die Detektionsschaltung (235, 335, 435, 535) ein internes Widerstandsnetzwerk ($R_{topint}$, $R_{botint}$) beinhaltet, das die Standardausgangsspannung spezifiziert, und wobei die Rückkopplungsspannung auf die Standardausgangsspannung durch Verbinden des internen Widerstandsnetzwerks ($R_{topint}$, $R_{botint}$) mit der Rückkopplungsschleife eingestellt wird.

2. Netzteilschaltung nach Anspruch 1, wobei die Detektionsschaltung (235, 335, 435, 535) ferner dafür ausgelegt ist, die Rückkopplungsspannung auf die Eingangs-Pin-Spannung einzustellen, wenn ein externer Widerstand detektiert wird.

3. Netzteilschaltung nach Anspruch 1, wobei die Detektionsschaltung (235, 335, 435, 535) ferner dafür ausgelegt ist, die Rückkopplungsspannung auf eine Referenzspannung des Netzteils einzustellen, wenn ein externer Widerstand detektiert wird und wenn die Eingangs-Pin-Spannung einen vordefinierten Wert aufweist.

4. Netzteilschaltung nach Anspruch 1, wobei die Detektionsschaltung (235, 335, 435, 535) umfasst: eine Pull-up-Schaltung, die dafür ausgelegt ist, einen ersten Impuls in den Ausgangsstrom des Netzteils einzuspeisen und ferner dafür ausgelegt ist, eine erste Änderung der Eingangs-Pin-Spannung als Reaktion auf den ersten Impuls zu erfassen; und eine Pull-up-Latch-Schaltung, die dafür ausgelegt ist, aufzuzeichnen, ob die erste Änderung der Eingangs-Pin-Spannung detektiert wird.

5. Netzteilschaltung nach Anspruch 4, wobei die Detektionsschaltung (235, 335, 435, 535) ferner beinhaltet: eine Pull-down-Schaltung, die dazu betreibbar ist, einen zweiten Impuls in den Ausgangsstrom des Netzteils einzuspeisen und ferner dafür ausgelegt ist, eine zweite Änderung der Eingangs-Pin-Spannung als Reaktion auf den zweiten Impuls zu detektieren; und eine Pull-down-Latch-Schaltung, die dazu betreibbar ist, aufzuzeichnen, ob die zweite Änderung der Eingangs-Pin-Spannung detektiert wird.

6. Netzteilschaltung nach Anspruch 5, wobei ein externer Widerstand mit dem Eingangs-Pin (210, 310, 410, 510, 605) verbunden ist, wenn die Pull-up-Latch-Schaltung die Detektion der ersten Änderung der Eingangs-Pin-Spannung aufzeichnet und wenn die Pull-down-Latch-Schaltung Verriegelung die Detektion der zweiten Änderung der Eingangs-Pin-Spannung aufzeichnet.

7. Netzteilschaltung nach Anspruch 1, wobei die Detektionsschaltung (235, 335, 435, 535) während eines Testmodus aktiviert wird, der nach einem vordefinierten Intervall endet.

8. Netzteilschaltung nach Anspruch 4, wobei die Dauer des ersten Impulses auf der Grundlage einer Kapazität ausgewählt wird, die extern mit dem Eingangs-Pin (210, 310, 410, 510, 605) verbunden ist.

9. Verfahren zum Auslegen der Ausgangsspannung ($V_{OUT}$) eines Netzteils, wobei das Verfahren umfasst:

Einstellen einer Ausgangsspannung ($V_{OUT}$) des Netzteils auf der Grundlage einer über eine Rückkopplungsschleife bereitgestellten Rückkopplungsspannung;
Messen einer Eingangs-Pin-Spannung an einem Eingangs-Pin (210, 310, 410, 510, 605) des Netzteils;
Detektieren, ob die Eingangs-Pin-Spannung unter Verwendung eines externen Widerstandsnetzwerks ($R_{top}$, $R_{bot}$) angepasst wurde oder ob die Eingangs-Pin-Spannung die Ausgangsspannung ($V_{OUT}$) des Netzteils ist; und
Einstellen der Rückkopplungsspannung auf eine Standardausgangsspannung durch Verbinden eines internen Widerstandsnetzwerks ($R_{topint}$, $R_{botint}$) mit der Rückkopplungsschleife, wenn keine Anpassung der Eingangs-Pin-Spannung detektiert wird.

10. Verfahren nach Anspruch 9, ferner umfassend: Einstellen der Rückkopplungsspannung auf die Eingangs-Pin-Spannung, wenn ein Widerstand extern zum Eingangs-Pin (210, 310, 410, 510, 605) detektiert wird.

11. Verfahren nach Anspruch 9, ferner umfassend: Einstellen der Rückkopplungsspannung auf eine Referenzspannung des Netzteils, wenn ein Widerstand extern zum Eingangs-Pin (210, 310, 410, 510, 605) detektiert wird und wenn die Eingangs-Pin-Spannung einen vordefinierten Wert aufweist.

12. Verfahren nach Anspruch 9, ferner umfassend: Anlegen eines ersten Impulses an den Ausgangsstrom des Netzteils; Detektieren einer ersten Änderung der Eingangs-Pin-Spannung als Reaktion auf den ersten Impuls; und Aufzeichnen, ob die erste Änderung der Eingangs-Pin-Spannung detektiert wird; optional wobei die Dauer des ersten Impulses auf der Grundlage einer Kapazität ausgewählt wird, die extern zum Eingangs-Pin verbunden ist (210, 310, 410, 510, 605).

13. Verfahren nach Anspruch 12, ferner umfassend: Anlegen eines zweiten Impulses an den Ausgangsstrom des Netzteils; Detektieren einer zweiten Änderung der Eingangs-Pin-Spannung als Reaktion auf den zweiten Impuls; und Aufzeichnen, ob die zweite Änderung der Eingangs-Pin-Spannung detektiert wird.

14. Verfahren nach Anspruch 13, ferner umfassend: Bestimmen, dass ein externer Widerstand mit dem Eingangs-Pin (210, 310, 410, 510, 605) verbunden ist, wenn die erste Änderung der Eingangs-Pin-Spannung als Reaktion auf den ersten Impuls aufgezeichnet wird und wenn die zweite Änderung der Eingangs-Pin-Spannung als Reaktion auf den zweiten Impuls aufgezeichnet wird.

15. Verfahren nach Anspruch 9, ferner umfassend: Detektieren des externen Widerstands während eines Testmodus, der nach einem vordefinierten Intervall endet.

**Revendications**

1. Circuit d'alimentation électrique à découpage configuré pour commander la conversion d'une tension d'entrée ($V_{IN}$) en une tension de sortie ($V_{OUT}$), comportant ;
un circuit (200, 300, 400, 500) de commande de commutateur configuré pour fournir des signaux de commutation de transistor afin de régler la tension de sortie ($V_{OUT}$) d'après une tension de réaction fournie via une boucle de réaction ;
une broche (210, 310, 410, 510, 605) d'entrée configuré pour recevoir une tension de broche d'entrée ; et
un circuit (235, 335, 435, 535) de détection configuré pour détecter si la tension de broche d'entrée a été ajustée à l'aide d'un réseau de résistances externes ($R_{top}$, $R_{bot}$) ou si la tension de broche d'entrée est la tension de sortie ($V_{OUT}$) de l'alimentation électrique, le circuit (235, 335, 435, 535) de détection étant en outre configuré pour régler la tension de réaction à une tension de sortie par défaut si aucun ajustement de tension de broche d'entrée n'est détecté, le circuit (235, 335, 435, 535) de détection comprenant un réseau de résistances internes ($R_{topint}$, $R_{botint}$) spécifiant la tension de sortie par défaut, et la tension de réaction étant réglée à la tension de sortie par défaut en reliant le réseau de résistances internes ($R_{topint}$, $R_{botint}$) à la boucle de réaction.

2. Circuit d'alimentation électrique selon la revendication 1, le circuit (235, 335, 435, 535) de détection étant en outre configuré pour régler la tension de réaction à la tension de broche d'entrée, si une résistance externe est détectée.

3. Circuit d'alimentation électrique selon la revendication 1, le circuit (235, 335, 435, 535) de détection étant en outre configuré pour régler la tension de réaction à une tension de référence de l'alimentation électrique, si une résistance externe est détectée et si la tension de broche d'entrée a une valeur prédéfinie.

4. Circuit d'alimentation électrique selon la revendication 1, le circuit (235, 335, 435, 535) de détection comprenant : un circuit de rappel vers le haut configuré pour appliquer une première impulsion dans le courant de sortie de l'alimentation électrique et configuré en outre pour détecter un premier changement dans la tension de broche d'entrée en réaction à la première impulsion ; et une bascule de rappel vers le haut configurée pour enregistrer le fait que le premier changement est détecté ou non dans la tension de broche d'entrée.

5. Circuit d'alimentation électrique selon la revendication 4, le circuit (235, 335, 435, 535) de détection comprenant en outre : un circuit de rappel vers le bas exploitable pour appliquer une seconde impulsion dans le courant de sortie de l'alimentation électrique et configuré en outre pour détecter un second changement dans la tension de broche d'entrée en réaction à la seconde impulsion ; et une bascule de rappel vers le bas exploitable pour enregistrer le fait que le second changement est détecté ou non dans la tension de broche d'entrée.

6. Circuit d'alimentation électrique selon la revendication 5, une résistance externe étant reliée à la broche (210, 310, 410, 510, 605) d'entrée si la bascule de rappel vers le haut enregistre la détection du premier changement dans la tension de broche d'entrée et si la bascule de rappel vers le bas enregistre la détection du second changement dans la tension de broche d'entrée.

7. Circuit d'alimentation électrique selon la revendication 1, le circuit (235, 335, 435, 535) de détection étant activé pendant un mode de test qui expire après un intervalle prédéfini.

8. Circuit d'alimentation électrique selon la revendication 4, la durée de la première impulsion étant sélectionnée d'après une capacitance branchée extérieurement à la broche (210, 310, 410, 510, 605) d'entrée.

9. Procédé de configuration de la tension de sortie ($V_{OUT}$) d'une alimentation électrique, le procédé comportant les étapes consistant à :

   régler une tension de sortie ($V_{OUT}$) de l'alimentation électrique d'après une tension de réaction fournie via une boucle de réaction ;
   mesurer une tension de broche d'entrée au niveau d'une broche (210, 310, 410, 510, 605) d'entrée de l'alimentation électrique ;
   détecter si la tension de broche d'entrée a été réglée à l'aide d'un réseau de résistances externes ($R_{top}$, $R_{bot}$) ou si la tension de broche d'entrée est la tension de sortie ($V_{OUT}$) de l'alimentation électrique ; et
   régler la tension de réaction à une tension de sortie par défaut en reliant un réseau de résistances internes ($R_{topint}$, $R_{botint}$) à la boucle de réaction si aucun ajustement de tension de broche d'entrée n'est détecté.

10. Procédé selon la revendication 9, comportant en outre l'étape consistant à : régler la tension de réaction à la tension de broche d'entrée, si une résistance est détectée extérieurement à la broche (210, 310, 410, 510, 605) d'entrée.

11. Procédé selon la revendication 9, comportant en outre l'étape consistant à : régler la tension de réaction à une tension de référence de l'alimentation électrique, si une résistance est détectée extérieurement à la broche (210, 310, 410, 510, 605) d'entrée et si la tension de broche d'entrée a une valeur prédéfinie.

12. Procédé selon la revendication 9, comportant en outre les étapes consistant à : appliquer une première impulsion dans le courant de sortie de l'alimentation électrique ; détecter un premier changement dans la tension de broche d'entrée en réaction à la première impulsion ; et enregistrer le fait que le premier changement est détecté ou non dans la tension de broche d'entrée ; la durée de la première impulsion étant optionnellement sélectionnée d'après une capacitance branchée extérieurement à la broche (210, 310, 410, 510, 605) d'entrée.

13. Procédé selon la revendication 12, comportant en outre les étapes consistant à : appliquer une seconde impulsion dans le courant de sortie de l'alimentation électrique ; détecter un second changement dans la tension de broche d'entrée en réaction à la seconde impulsion ; et enregistrer le fait que le second changement est détecté ou non dans la tension de broche d'entrée.

14. Procédé selon la revendication 13, comportant en outre les étapes consistant à : déterminer qu'une résistance externe est reliée à la broche (210, 310, 410, 510, 605) d'entrée si le premier changement dans la tension de broche d'entrée est enregistré en réaction à la première impulsion et si le second changement dans la tension de broche d'entrée est enregistré en réaction à la seconde impulsion.

15. Procédé selon la revendication 9, comportant en outre : la détection de la résistance externe pendant un mode de test qui expire après un intervalle prédéfini.

FIG. 1

FIG. 2

FIG. 3

FIG. 4

FIG. 5

FIG. 6

EP 3 205 024 B1

**EP 3 205 024 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2008048631 A
- US 5864225 A